# EUROPÄISCHE PATENTANMELDUNG

(11) **EP 2 130 430 A1**
(43) Veröffentlichungstag der Anmeldung: **09.12.2009**
(21) Anmeldenummer: 08010399.7
(22) Anmeldetag: 07.06.2008
(51) Int. Cl.: A01K 13/00

(54) **Reinigungsvorrichtung für Hundepfoten**

(71) Anmelder: Foldenauer, Willi, 81247 München (DE)
(72) Erfinder: Foldenauer, Willi, 81247 München (DE)

(57) **Zusammenfassung**

Die vorliegende Erfindung beschreibt eine einfache und handliche Vorrichtung zur Reinigung von Hundepfoten, bestehend aus einem flüssigkeitsbefüllbaren Hohlkörper, dessen Innenwände mit Reinigungskörpern, wie zum Beispiel Bürsten besetzt sind. Mit deren Hilfe kann Schmutz sowohl trocken, als auch nass aus dem Fell der Beine und Pfoten entfernt werden. Die Vorrichtung kann auch über einen Adapter an eine externe Flüssigkeitszufuhr, wie eine Sprayflasche angeschlossen werden. Sie eignet sich in dieser Ausführungsform als Dusche oder Desinfektionskammer. Die Erfindung betrifft zudem ein entsprechendes Verfahren zur Reinigung von Hundepfoten, unter Zugabe von medizinischen oder desinfizierenden Zusätzen.

## Beschreibung

Die vorliegende Erfindung beschreibt eine Reinigungsvorrichtung für Hundepfoten.

Hunde müssen bei jeder Witterung bekannter Weise mehrmals täglich spazieren geführt werden. Aufgrund ihrer Verhaltensweise scharren sie dabei in der Erde, graben nach Mäusen oder laufen durch Pfützen und Matsch, wobei sich der Schmutz zwischen den Zehen und auch im Fell an den Beinen festsetzt. Zuhause angekommen muss man, wenn man nicht diesen Schmutz in der Wohnung verteilt haben will, die Pfoten der Hunde reinigen. Dies macht man normalerweise mit einem feuchten Lappen oder man duscht seinen Hund gleich in der Dusche ab.

Nachteil dieses Vorgehens ist es, dass bei Verwendung eines feuchten Tuches die zwischen den Zehen befindlichen Erdklumpen verschmiert werden, oder auf den Boden fallen. Das Duschen des Hundes andererseits ist mit viel Arbeit verbunden.

Ziel der vorliegenden Erfindung ist es, eine einfache und kostengünstige Vorrichtung zu entwickeln, die kompakt ist, von jedem Hund problemlos toleriert wird und sowohl von Rechts- als auch Linkshändern sicher eingesetzt werden kann. Sie soll zudem nicht nur die Unterseite der Pfoten sicher säubern, sondern auch die Haare der unteren Beinpartien, sie soll Orts unabhängig und

Energie unabhängig sein und für alle Größen von Hunden einsetzbar sein.

Das Ziel wird durch eine erfindungsgemäße Vorrichtung erreicht, die aus einem wasserfesten Behälter besteht, in dessen Innerem bodenwärts und zumindest an Teilen der Seitenwände Reinigungsteile angebracht sind. Diese Reinigungsteile sind bevorzugt Borsten oder Fasern oder schwammähnliche Teile. Der wasserfeste Behälter wird für den Reinigungsvorgang zumindest teilweise mit Wasser gefüllt. Die zu reinigende Hundepfote wird in den Behälter zwischen die Reinigungsteile eingebracht. Die Reinigung der Pfoten wird deutlich erleichtert und beschleunigt, wenn man mit einer Hand die zu reinigende Pfote etwas hoch hält und mit der anderen Hand die erfindungsgemäße Reinigungsvorrichtung wie eine Bürste entlang des Hundebeines und um dieses in Halbkreisen herum bewegt. Hält man nämlich eine Hundepfote hoch, so kann man beobachten, dass die Pfote sich reflexartig streckt und mit dem Unterschenkel ein Linie bildet, was bei der Konstruktion einer besonders vorteilhaften Ausführungsform des Borstenpaketes in U-Form ausgenutzt wurde. In einem Arbeitsgang wird dabei nicht nur die Unterseite der Pfote gewaschen, sondern auch die Haarpartien der unteren Beinbereiche.

Diese Gestaltungsform ermöglicht die Anwendung der Vorrichtung sowohl für kleine, als auch große Hunde, da die gestreckte Pfote immer an den Seitenborsten der Vorrichtung gereinigt werden kann und somit unabhängig von der Eindringtiefe in die Reinigungsvorrichtung ist.

Bei einer besonders vorteilhaften Ausführungsform ist der Haltegriff und das U-förmige innere Reinigungsteil in einer vertikalen Ebene angeordnet. Dies erleichtert die Koordination der Bürstbewegung entlang und rund um das Hundebein.

Bei einer weiteren besonders praktischen Ausführungsform der Erfindung sind zusätzlich zu den mechanischen Reinigungsteilen auch Wasserdüsen im Inneren der Reinigungsvorrichtung angebracht. An der Reinigungsvorrichtung selbst ist außen ein Schlauchadapter vorhanden, über den ein Schlauchzwischenstück zum Wasserhahn angeschlossen werden kann. Die Reinigungsvorrichtung wirkt somit nach innen wie ein Duschkopf, der die Pfoten sowie die Beine von Hunden abduschen kann.

Bei einer anderen besonders praktischer Ausführungsform ist an der Reinigungsvorrichtung ein Adapter für eine Sprayflasche angebracht. Die Sprayflasche, vorzugsweise eine Pumpsprayflasche, wird über eine dem Adapter passgenauen Düse, an die Reinigungsvorrichtung aufgesteckt. Die Sprayflasche kann mit unterschiedlichen Flüssigkeiten, je nach Reinigungsabsicht gefüllt werden. Ist sie mit Wasser gefüllt, wirkt die Reinigungsvorrichtung zusammen mit der Pumpsprayflasche als Pfotendusche. Da die in die Reinigungsvorrichtung von außen eingesprühte Flüssigkeit an der Pfote und den Innenwänden der Vorrichtung abperlt, kann diese Art der Pfotenreinigung sowohl zuhause in der Wohnung, als auch unterwegs, vor dem Einsteigen in ein Auto, ohne Flecken zu hinterlassen, durchgeführt werden. Selbstverständlich können auch andere Flüssigkeiten, wie Pflegemittel bei verletzten oder rauen Pfoten, oder auch Desinfektionsmittel, in Zeiten hoher Infektionsgefahr, wie dies bei der drohenden Vogelgrippe notwendig werden kann, verwendet werden. Über die mit Flüssigkeit gefüllte Pumpsprayflasche ist man unterwegs von einer Wasserquelle für mehrere Reinigungsvorgänge unabhängig. Um beim Pumpvorgang ausreichend Platz zwischen Fingern und Duschwanne zu haben, ist die Duschwanne unterhalb des Adapters entweder eingebuchtet, oder der Spraykopf der Pumpsprayflasche verlängert, dass ein berührungsfreies Pumpen möglich wird.

Bei einer anderen praktischen Ausführungsform ist der Griff entlang des wasserfesten Behälterteils so angebracht, dass die Finger unter den Behälter greifen und der Handballen parallel zur Seitenwand zu liegen kommt. In dieser Position hat man eine besonders sensible Verbindung zu dem U-förmigen Bürstenteil und vermindert damit die Gefahr, beim Reinigen zu fest auf die Pfoten aufzudrücken.

Bei einem weiteren erfindungsgemäßen Ausführungsbeispiel ist der wasserfeste Behälterteil und der Reinigungsteil voneinander trennbar. Dies hat gerade bei der Verwendung von Borstenpaketen einerseits fertigungstechnische Vorteile, andererseits kann man die einzelnen Teile bei starker Verschmutzung in auseinandergenommenem Zustand auch leichter sauber machen.

Bei einer besonderen auseinander nehmbaren Vorrichtung ist der Behälter wannenförmig und die Reinigungsteile sind in einen wasserfesten Handschuh integrierbar. Diese Vorrichtung eignet sich besonders gut für sehr empfindliche und scheue Tiere.

Die Erfindung beschreibt auch ein Verfahren zum Reinigen von Hundebeinen und Hundepfoten. Das zu reinigende Hundebein wird dazu in einen, an seinen Innenwänden mit Reinigungskörpem, wie Borsten, Schwämmen, Haaren oder Duschdüsen, besetzten Hohlkörper eingeführt. Der Hohlkörper wird mit Flüssigkeit gefüllt, in die je nach Erfordernissen auch medizinische Zusätze gegeben werden, oder aber, über eine Sprayvorrichtung, von außen mit Flüssigkeit versorgt. Besonders im Winter, wenn die Straßen und Gehwege gesalzen sind, ist es oft zur Pflege von Hundepfoten erforderlich, mit Medikamenten, insbesondere auf Kräuterbasis die strapazierten Pfotenballen zu pflegen. Diese können der Reinigungsflüssigkeit zugegeben werden und auf die Pfoten im Behälter einwirken. Aber auch in anderen Situationen, besonders drohenden Epidemien, wie z.B. der Vogelgrippe, kann es in Zukunft unumgänglich werden, nach dem Spazieren gehen die Pfoten und Beine der Hunde zu desinfizieren. Reinigung und Desinfektion kann durch die Kombination von Bürsten und Desinfektionsbad, oder einem über einen Adapter von außen zugeführten Spraynebel, in dem Behälter erfolgen. Ein ganz entscheidender Vorteil gegenüber anderen Pfotenreinigungstechniken ist, dass man bei der erfindungsgemäßen Pfotenreinigung selbst mit der schmutzigen Pfote nicht in Berührung kommt, was bei Verwendung von Tüchern oder Schwämmen auf direktem oder zumindest indirektem Wege immer der Fall ist, da man die schmutzigen Tücher auswringen und auswaschen muss, während der erfindungsgemäße Behälter ohne direkten Kontakt ausgewaschen werden kann. Bei der Verwendung von Desinfektionsmitteln hat die erfindungsgemäße Pfotenreinigung den Vorteil, dass das Desinfektionsmittel im Reinigungsbehälter, quasi in einer mobilen Desinfektionskammer, in hoher Konzentration auftritt, und an den Wänden dann sich niederschlägt, ohne dass bedeutendere Mengen davon nach außen gelangen, was bei den zunehmenden Allergien gegen diese Mittel für viele Anwender von großer Bedeutung sein kann.

Es zeigen:

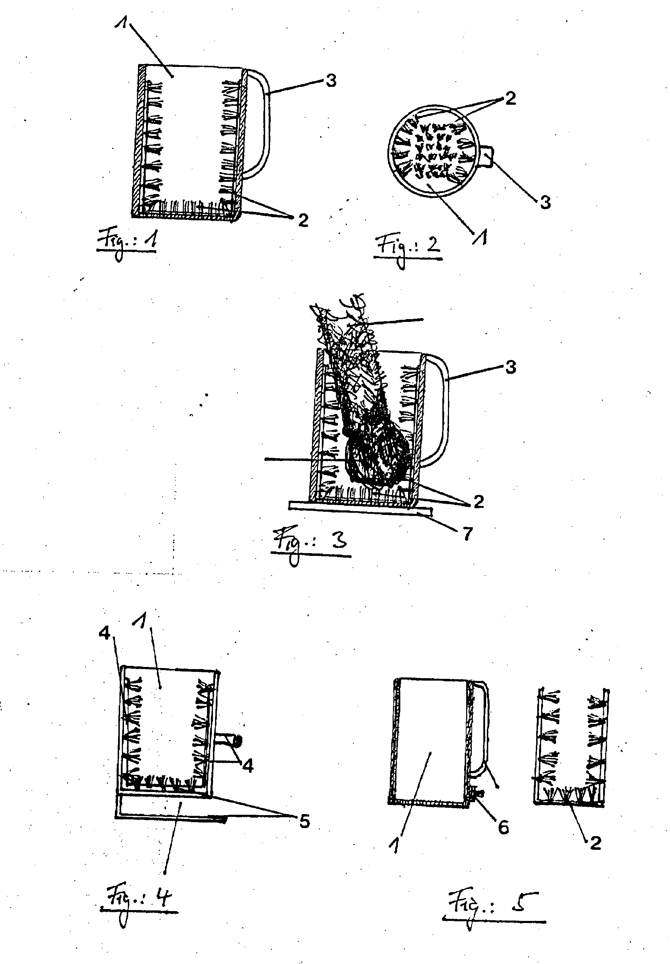

- Fig.1:: erfindungsgemäße Reinigungsvorrichtung im Längsschnitt
- Fig.2:: erfindungsgemäße Reinigungsvorrichtung in Aufsicht
- Fig.3:: Beispiel eines Reinigungsvorgangs einer Pfote
- Fig.4:: Schnitt durch eine Reinigungsvorrichtung mit tangentialer Griffmulde
- Fig.5:: Schnitt durch voneinander getrennten Behälter und Borstenpaket

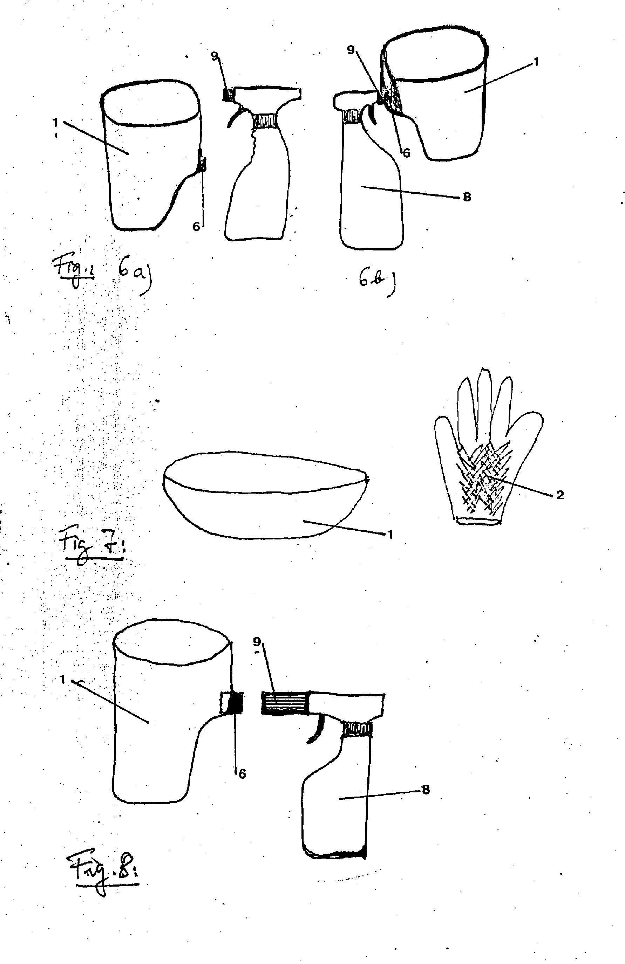

- Fig.6:: Seitenansicht einer erfindungsgemäßen Reinigungsvorrichtung mit einer über einen Adapter anschließbaren Pumpsprayflasche, a) getrennt voneinander, b) zusammengesteckt
- Fig.7:: Seitenansicht einer wannenförmigen Reinigungsvorrichtung mit getrennten, in einen wasserdichten Handschuh integrierten, Reinigungsteilen.
- Fig.8:: Seitenansicht einer Duschwanne mit charakteristischer Adapterform und passgenauer, verlängerter Düsenspitze

## Patentansprüche

1. Reinigungsvorrichtung für Hundepfoten, **dadurch gekennzeichnet, dass** ein nach oben offener, flüssigkeitsdichter Behälter (1) zumindest in Teilbereichen seiner Innenwände mit einem mechanischen oder wassersprühenden Reinigungsteil (2) ausgekleidet ist.

2. Reinigungsvorrichtung für Hundepfoten nach Anspruch 1, **dadurch gekennzeichnet, dass** an den Außenwänden des Behälters (1) zumindest ein Griffbereich (3) angebracht ist.

3. Reinigungsvorrichtung für Hundepfoten nach Anspruch 1, **dadurch gekennzeichnet, dass** der Griffbereich (3) abgewinkelt über eine Seitenwand (4) und den Boden (5) des Behälters (1) geht.

4. Reinigungsvorrichtung für Hundepfoten nach Anspruch 1, **dadurch gekennzeichnet, dass** der mechanische Reinigungsteil (2) bevorzugt aus Borsten, Fasern oder schwammähnlichen Materialien besteht.

5. Reinigungsvorrichtung für Hundepfoten nach Anspruch 1, **dadurch gekennzeichnet, dass** an der Außenwand des Behälters (1) ein Schlauch-Anschlussadapter(6) integriert ist.

6. Reinigungsvorrichtung für Hundepfoten nach Anspruch 1, **dadurch gekennzeichnet, dass** am Behälter (1) eine den Boden (5) überragende Standplatte (7) angebracht ist.

7. Reinigungsvorrichtung für Hundepfoten nach Anspruch 1, **dadurch gekennzeichnet, dass** Behälter (1) und Reinigungsteil (2) aus auseinander nehmbaren Teilen besteht.

8. Reinigungsvorrichtung für Hundepfoten nach Anspruch 1, oder einem der folgenden, **dadurch gekennzeichnet, dass** der Behälter (1) aus einem nicht starren, wasserfesten Material, wie Gummi oder einer Kunststofffolie besteht.

9. Reinigungsvorrichtung für Hundepfoten nach Anspruch 1,7 und 8, **dadurch kennzeichnet, dass** der Behälter (1) wannenförmig ausgeformt ist und die Reinigungsteile (2) in einen wasserdichten Handschuh (10) integriert sind

10. Reinigungsvorrichtung für Hundepfoten nach Anspruch 1 oder 5 **dadurch gekennzeichnet, dass** an den Außenwänden des Behälters (1) zumindest ein Adapter (6) angebracht ist, in den die Düsenspitze (9) einer Sprayflasche (8) eingebracht werden kann.

11. Verfahren zum Reinigen von Hundebeinen und Hundepfoten, **dadurch gekennzeichnet, dass** das zu reinigende Bein in einen, innen mit Reinigungskörpem, wie Borsten, Haaren, Schwämmen oder Sprühdüsen, ausgekleideten Hohlkörper eingeführt wird, der teilweise mit Flüssigkeit gefüllt werden kann, oder in den über zumindest eine Zuleitung von außen Flüssigkeiten eingesprüht werden können. Mit Bürstenbewegungen der Vorrichtung, und damit der innenliegenden Reinigungsteile, entlang des Beines wird die leicht angehobene Hundepfote gereinigt. Als Flüssigkeiten werden neben Wasser auch Reinigungsmittel, medizinische Zusätze und Desinfektionsmittel verwendet.
